# FASCICULE DE BREVET EUROPEEN

(11) **EP 2 085 301 B1**
(45) Date de publication et mention de la délivrance du brevet: **12.10.2011**
(21) Numéro de dépôt: 09290076.0
(22) Date de dépôt: 02.02.2009
(51) Int. Cl.: B62H 3/00, B62H 5/00

(54) **Dispositif de verrouillage**
Verriegelungsvorrichtung
Locking device

(30) Priorité: 01.02.2008 FR 0800563
(43) Date de publication de la demande: 05.08.2009
(73) Titulaire: Tracetel S.A., 78320 La Verriere (FR)
(72) Inventeur: Benamara, Raouf, 78610 Le Perray en Yvelines (FR); Emery, Jean, 78470 Saint Remy les Chevreuses (FR)
(74) Mandataire: Debay, Yves

(56) Documents cités:
- EP-A- 1 820 722
- DE-U1- 29 514 550
- FR-A- 2 837 460
- FR-A- 2 837 781

## Description

L'invention concerne le domaine du stockage de cycles. L'invention concerne plus particulièrement un dispositif de verrouillage permettant la fonction antivol.

Les cycles proposés à la location sont stockés sur des bornes de fixation par exemple par une gâche bloquant ou libérant un dispositif d'accrochage fixé sur un cycle. Un cycle est ainsi utilisé par un usager après que l'usager a libéré le cycle de sa borne d'accrochage. Le temps d'utilisation jusqu'à une nouvelle fixation à une borne d'accrochage, éventuellement pour une facturation, peut ainsi être contrôlé. Au cours d'une période d'utilisation du cycle par un usager, un cycle peut aussi être attaché par un dispositif antivol. Les cycles proposés à la location sont notamment équipés d'un dispositif antivol solidarisé au cadre du cycle, permettant par exemple à un usager de stationner le cycle lors d'un arrêt court.

Un problème des systèmes de stockage de cycles équipés chacun d'un antivol, est notamment d'empêcher un utilisateur de bloquer un cycle sur sa borne de stockage avec l'antivol équipant le cycle. La demande de brevet EP 1 820 722 enseigne, par exemple, un système comprenant des postes de verrouillage fixes, chaque poste de verrouillage étant équipé d'une gâche pour recevoir un organe de verrouillage fixé au cycle. Chaque cycle comprend notamment un antivol formé par un lien souple fixé au cycle, le lien ayant à son extrémité une broche pouvant être insérée dans un logement de réception disposé voisin de l'organe de verrouillage. Le logement de réception de la broche est aussi disposé vers l'avant par rapport à l'organe de verrouillage, dans la direction d'insertion de l'organe de verrouillage dans la gâche. Ainsi la broche de l'antivol inséré dans le logement prévu sur le cycle empêche de positionner le cycle sur le poste de verrouillage. D'autre part, le dispositif de verrouillage, lorsqu'il est inséré dans la gâche du poste de verrouillage, empêche d'insérer la broche de l'antivol dans son logement. Cependant ce système de permet pas de protéger la clé de l'antivol contre un usager mal intentionné voulant dérober la clé. Un usager peut en effet facilement débloquer le logement de réception de la broche de l'antivol, par exemple à l'aide d'une tige droite en métal, pour retirer la clé de son logement. Une fois la clé retirée grâce à une simple tige métallique retirée ensuite sans difficulté, le cycle peut être accroché de nouveau sur une borne de stockage, par l'usager mal intentionné qui n'est pas alors inquiété. Un système de stockage des cycles pourrait ainsi être rapidement détérioré. Il existe donc un besoin pour protéger un système de stockage des cycles contre le vol des clés sur les antivols des cycles.

La présente invention a pour objet de pallier un ou plusieurs inconvénients de l'art antérieur, en proposant un dispositif de verrouillage réalisant une fonction d'accrochage avec une borne et une fonction de blocage d'un logement pouvant accueillir, par exemple, un embout d'antivol.

Cet objectif est atteint grâce à un dispositif de verrouillage comprenant :
- un corps fixable à un cycle et comprenant un logement avec au moins une ouverture d'accès au logement, le corps étant lié avec un organe de verrouillage ayant au moins une position déterminée de stockage dans laquelle l'organe de verrouillage peut être bloqué dans une gâche d'une borne de stockage du cycle,
- une clé actionnant une serrure disposée dans le corps,
caractérisé en ce que l'ouverture d'accès au logement est bloquée au moins en partie par l'organe de verrouillage disposé dans une position de blocage de l'ouverture d'accès distincte de la position de stockage, la serrure ayant au moins une position angulaire prédéterminée d'extraction de la clé correspondant à un blocage, par la serrure, de l'organe de verrouillage dans sa position de blocage de l'ouverture d'accès.

Selon une autre particularité, le dispositif comprend un antivol comprenant un câble fixable au cycle et se terminant à une extrémité par un embout, le logement recevant l'embout du câble, l'embout étant inséré ou retiré du logement par l'ouverture d'accès.

Selon une autre particularité, le logement a une profondeur déterminée et comprend une paroi en face d'un axe saillant ayant un axe de symétrie, l'embout étant réalisé de forme annulaire, de diamètre intérieur supérieur au diamètre de l'axe saillant, de diamètre extérieur inférieur au double de la distance séparant la paroi de l'axe de symétrie de l'axe saillant et d'épaisseur inférieure à la profondeur du logement.

Selon une autre particularité, la clé reste bloquée dans la serrure dans des positions non verrouillées de la serrure, la serrure comprenant un verrou mobile tournant avec la clé et coopérant avec un organe interne au corps, cet organe interne étant mobile avec l'organe de verrouillage ou bloquant l'organe de verrouillage lorsque le verrou de la serrure bloque cet organe interne.

Selon une autre particularité, l'organe interne comprend un axe interne guidé en rotation dans le corps et solidarisé avec l'organe de verrouillage, l'axe interne comprenant au moins une fente ou une encoche de coopération avec le verrou, la position de stockage correspondant à une position de l'organe de verrouillage disposé vers l'avant du cycle, la position de blocage de l'ouverture d'accès correspondant à une position de l'organe de verrouillage disposé le haut, le bas ou l'arrière du cycle.

Selon une autre particularité, l'organe de verrouillage comprend une plaque de guidage dans la gâche, la plaque de guidage étant jointe en son milieu par une partie perpendiculaire comprenant un évidemment ou une encoche ou un bec de verrouillage dans la gâche.

La présente invention a aussi pour objet de pallier un ou plusieurs inconvénients de l'art antérieur, en proposant un système de stockage de cycles équipés chacun d'un dispositif de verrouillage réalisant une fonction d'accrochage avec une borne et une fonction de blocage d'un logement pouvant accueillir, par exemple, un embout d'antivol.

Cet objectif est atteint grâce à un système de stockage pour au moins un cycle équipé d'un dispositif de verrouillage selon l'invention caractérisé en ce qu'il comprend au moins une borne d'accrochage comprenant une gâche permettant un accrochage de l'organe de verrouillage dans une position déterminée de l'organe de verrouillage distincte de sa position de blocage de l'ouverture d'accès au logement.

Selon une autre particularité le système de stockage comprend un composant de gestion comprenant une interface d'utilisation communiquant avec un module d'identification ou de paiement autorisant l'activation d'un module de commande de déblocage de ladite gâche de ladite borne, le module de commande de déblocage activé étant piloté par l'interface d'utilisation.

L'invention, ses caractéristiques et ses avantages apparaîtront plus clairement à la lecture de la description faite en référence aux figures données à titre d'exemple non limitatif dans lesquelles :
- les figures 1 et 2 représentent chacune une vue en perspective d'un exemple de dispositif de verrouillage selon l'invention en position de blocage d'un embout d'antivol ;
- les figures 3 et 4 représentent chacune une vue en perspective d'un exemple de dispositif de verrouillage selon l'invention en position d'insertion ou d'extraction d'un embout d'antivol ;
- les figures 5 et 6 représentent chacune une vue en perspective d'un exemple de dispositif de verrouillage selon l'invention en position de stockage ;
- la figure 7 représente une vue en perspective d'un exemple de dispositif de verrouillage selon l'invention en position de blocage de l'ouverture d'accès d'un logement ;
- la figure 8 représente une vue en perspective d'un exemple de dispositif de verrouillage selon l'invention en position de stockage ;
- la figure 9 représente une vue en perspective d'un exemple de dispositif de verrouillage selon l'invention en position d'insertion ou d'extraction d'un embout d'antivol ;
- la figure 10 représente une vue en perspective d'un exemple de dispositif de verrouillage selon l'invention en position de blocage d'un embout d'antivol ;
- les figures 11 et 12 représentent chacune un positionnement de stockage d'un dispositif de verrouillage selon l'invention ;
- les figures 13 et 14 représentent chacune un positionnement de blocage d'une ouverture d'accès d'un logement d'un dispositif de verrouillage selon l'invention.

L'invention va à présent être décrite en référence aux figures précédemment citées. Un système de stockage de cycles, installé par exemple en milieu urbain, comprend par exemple plusieurs bornes fixes, disposées par exemple dans sur un espace de stationnement ou sur un trottoir. Chaque borne est, par exemple, équipée d'une gâche d'accrochage et de maintien pour un organe de verrouillage fixé à un cycle. Le cycle est par exemple maintenu à la borne jusqu'à ce qu'un utilisateur commande la borne pour libérer l'organe de verrouillage pour pouvoir utiliser le cycle. Un composant de gestion commandant les bornes sera, par exemple décrit par la suite.

De manière non limitative, la gâche comprend une ou plusieurs surfaces de guidage de l'organe (3) de verrouillage, guidant une partie d'accrochage de l'organe (3) de verrouillage vers un organe d'accrochage de la gâche. L'organe d'accrochage de la gâche comprend, par exemple, un crochet ou un bec ou un verrou mobile maintenu de façon élastique en position verrouillée. Une commande électromagnétique permet par exemple de débloquer l'organe d'accrochage de la gâche. De manière non limitative, la partie d'accrochage de l'organe (3) de verrouillage comprend, par exemple, un évidement ou un bec ou une encoche ou une fente ou une rainure coopérant avec l'organe d'accrochage de la gâche.

Le dispositif de verrouillage comprend un corps (1) fixé au cycle. Le corps est fixé, de manière non limitative, par serrage, par vissage ou par soudage au cycle. Le corps comprend par exemple une surface arrondie (S1) venant contre une barre du cadre du cycle. Un collier de serrage ou une partie arrondie complémentaire permet par exemple un serrage de la barre du cadre contre le corps (1) du dispositif de verrouillage.

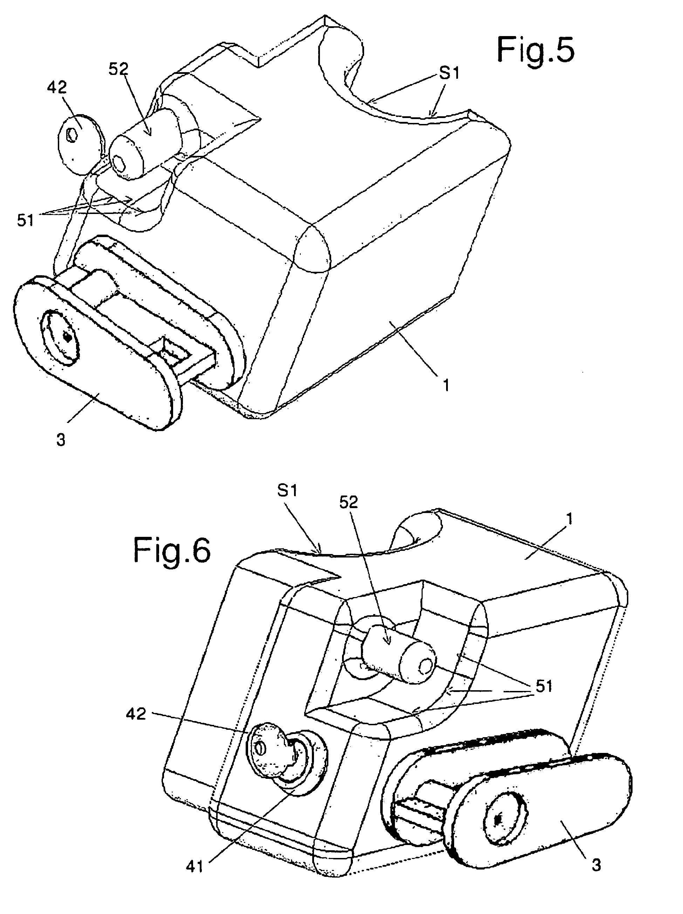

Le corps (1) est, par exemple, lié, de manière non limitative à l'opposé de la surface (S1) d'appui, à l'organe (3) de verrouillage mobile par rapport au corps (1). Cet organe (3) de verrouillage est par exemple positionné, par rapport au corps (1), dans une position de stockage, comme représenté sur les figures 5 et 6. La position de stockage permet par exemple le maintien de l'organe (3) de verrouillage dans la gâche d'une borne. De manière non limitative l'organe de verrouillage peut comprendre une ou plusieurs positions de stockage.

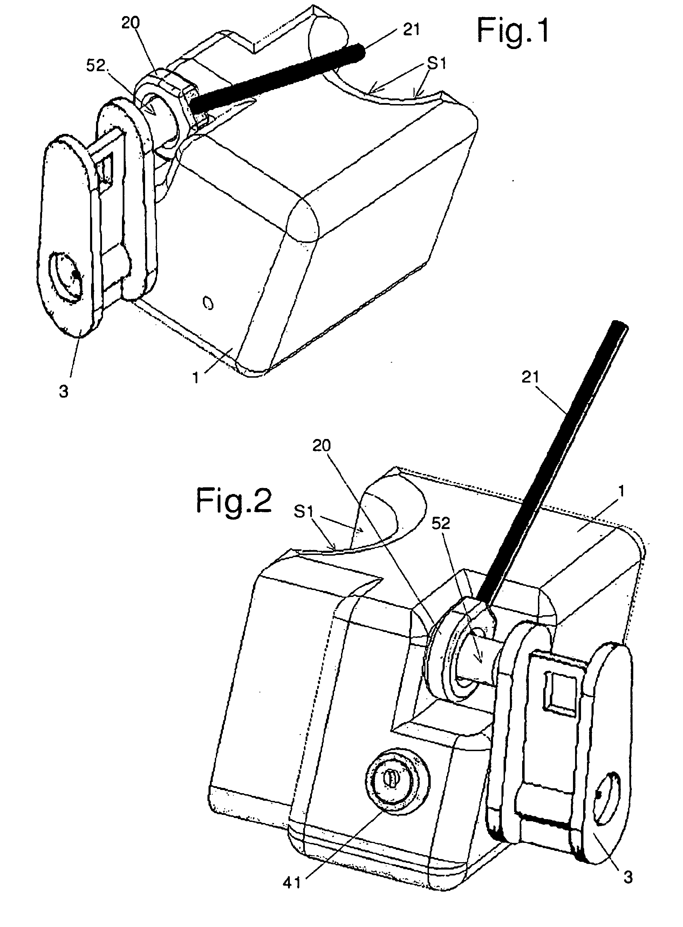

L'organe (3) de verrouillage peut aussi être positionné, par rapport au corps, dans une position de blocage d'une ouverture d'accès à un logement, comme représenté sur les figures 1 et 2. De manière non limitative, l'organe de verrouillage peut comprendre une ou plusieurs positions de blocage. Le corps (1) peut aussi comprendre un ou plusieurs logements.

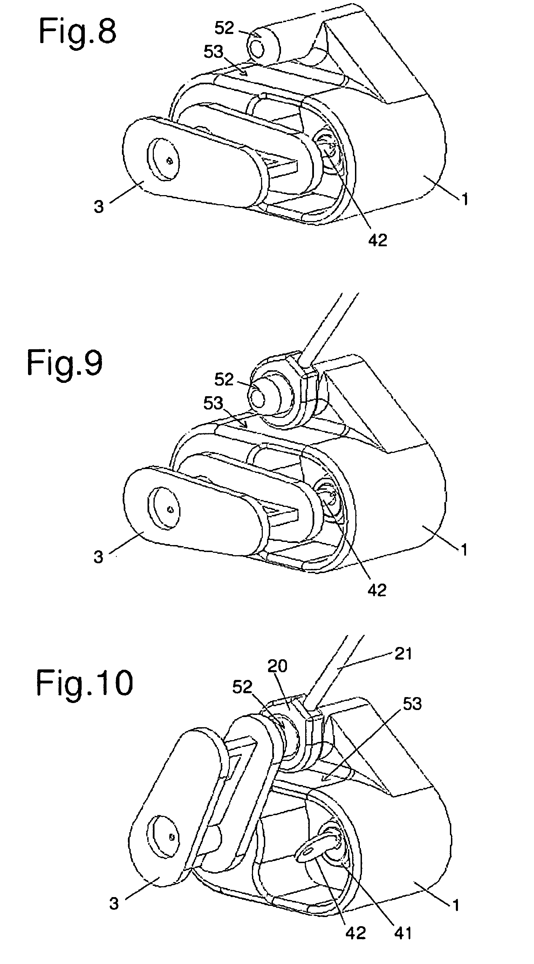

Le corps (1) comprend d'autre part une serrure (41) activée par une clé (42). De manière non limitative, la serrure (41) peut être disposée sur une face voisine de la face liée à l'organe (3) de verrouillage ou sur une face à l'opposé de l'organe de verrouillage. La serrure peut aussi être disposée sur le corps (1) du même côté que l'organe (3) de verrouillage et dans un creux réalisé dans le corps (1), comme représenté aux figures 8 à 9. De façon avantageuse, l'organe (3) de verrouillage en position de stockage peut être disposé en face de la clé (42), comme représenté à la figure 8, empêchant ainsi de tirer sur la clé (42). L'organe (3) de verrouillage peut ainsi réaliser d'une part le blocage de l'ouverture d'accès au logement recevant, par exemple, l'embout de l'antivol et d'autre part l'organe (3) de verrouillage mobile peut réaliser, dans sa position de stockage, le blocage de l'accès à la clé.

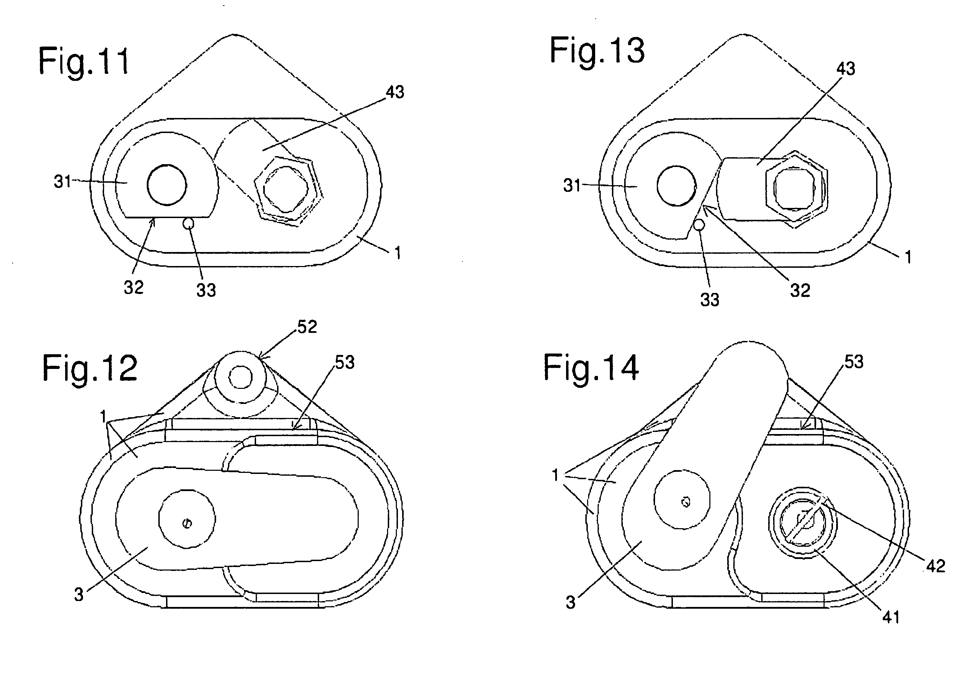

La serrure comprend par exemple un crochet ou un verrou (43) ou un pêne coopérant avec un organe (31) interne au corps (1) solidarisé à l'organe (3) de verrouillage. L'organe (31) interne est par exemple lié à l'organe (3) de verrouillage pour être mobile ou bloqué, par rapport au corps (1), en même temps que l'organe (3) de verrouillage. L'organe (31) interne comprend par exemple une encoche ou une fente ou une rainure ou un méplat (32) coopérant avec la serrure, permettant un verrouillage de la serrure et un blocage de l'organe (31) interne et de l'organe (3) de verrouillage se trouvant dans une position de blocage, comme représenté aux figures 13 et 14. Ainsi le verrouillage de la serrure entraîne le maintien de l'organe de verrouillage en position de blocage. D'autre part, lorsque l'organe (3) de verrouillage n'est pas en position de blocage, comme représenté aux figures 11 et 12, l'organe (31) interne est dans une position ne permettant pas le verrouillage de la serrure.

De façon avantageuse, la serrure coopère avec l'organe (31) interne au corps (1) et lié à l'organe (3) de verrouillage, cet organe interne n'étant pas accessible depuis l'extérieur du corps.

L'organe interne est par exemple un axe guidé en rotation dans le corps (1) et comprenant, par exemple, une rainure longitudinale ou un méplat (31) coopérant, par exemple, avec un pêne ou un verrou (43) de la serrure. L'axe est par exemple solidarisé à l'organe (3) de verrouillage. La rainure ou le méplat (32) de l'organe (31) interne est par exemple positionnée selon un angle déterminé pour venir en face du verrou de la serrure, lorsque l'organe de verrouillage est dans une position de blocage de l'ouverture d'accès vers le logement, comme représenté à la figure 2.

Les figures 11 et 12 représentent, par exemple, un même positionnement de stockage d'un dispositif de verrouillage. La figure 12 représente une vue de l'extérieur et la figure 11 représente les éléments internes du dispositif de verrouillage. L'organe (3) de verrouillage est, par exemple, quasiment horizontal, l'organe (31) interne ayant, par exemple, son méplat (32) vers le bas. De manière non limitative, une butée (33) interne vient contre le méplat (32) de façon à empêcher une rotation de l'organe (3) de verrouillage vers le bas, par rapport à sa position de stockage. Cette position de la serrure correspond, par exemple, à une position non verrouillée dans laquelle la clé ne peut pas être retirée.

Les figures 13 et 14 représentent, un même positionnement de blocage du dispositif de verrouillage représenté en position de stockage aux figures 11 et 12. La figure 14 représente une vue de l'extérieur et la figure 13 représente les éléments internes du dispositif de verrouillage. L'organe (3) de verrouillage est, par exemple contre l'extrémité de la partie (52) saillante formant le logement, de façon à bloquer l'ouverture d'accès au logement. Le verrou (43) est par exemple pivoté pour venir contre le méplat (32). De manière non limitative, le méplat est, d'autre part en appui contre la butée (33) interne limitant le mouvement de rotation de l'organe (31) interne solidarisé à l'organe (3) de verrouillage. Cette position de la serrure (41) correspond, par exemple, à une position verrouillée, dans laquelle la (42) clé peut être retirée.

De manière non limitative, la clé (42) peut être retirée de la serrure (41) seulement lorsque la serrure est verrouillée, la clé restant bloquée dans la serrure lorsque la serrure n'est pas en position verrouillée. Ainsi la serrure reste en position non verrouillée lorsque l'organe (3) de verrouillage n'est pas en position de blocage et la clé ne peut pas être retirée sans disposer l'organe de verrouillage en position de blocage. Une position de blocage est notamment distincte et incompatible avec une position de stockage. Pour retirer la clé un utilisateur positionne l'organe (3) de verrouillage dans une position de blocage puis verrouille la serrure afin de pouvoir retirer la clé. Un embout d'antivol inséré par exemple dans le logement ne peut plus alors être retiré sans déverrouiller la serrure et bouger l'organe de verrouillage.

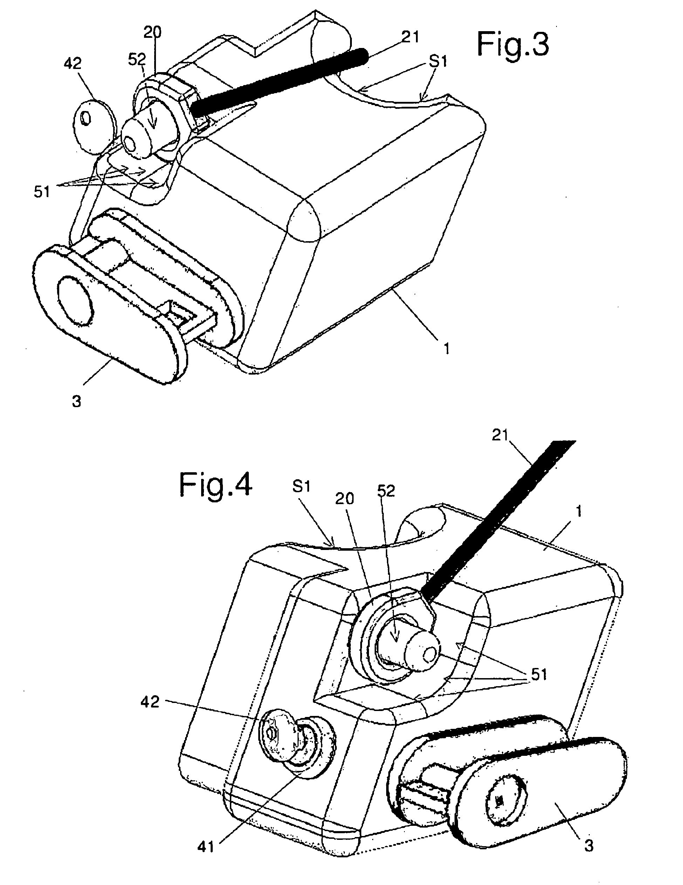

L'antivol comprend par exemple un câble (21) fixé au cycle, par exemple, par une extrémité. Le câble de l'antivol comprend, par exemple, à son autre extrémité, l'embout (20) pouvant être mis dans le logement. L'insertion d'un embout dans le logement est, par exemple représentée aux figures 3 et 4 et l'embout (20) bloqué dans le logement est, par exemple, représenté aux figures 1 et 2. Le câble est par exemple passé autour d'un arbre ou autour d'un poteau ou dans les roues et le cadre du cycle pour immobiliser le cycle. Pour pouvoir placer l'organe de verrouillage dans la position de stockage, un utilisateur doit alors déverrouiller la serrure, par exemple en introduisant la clé dans la serrure et en déverrouillant la serrure. Une serrure commandée électriquement peut aussi être utilisée. L'organe de verrouillage positionné dans une position autre qu'une position de blocage, empêche alors le verrouillage de la serrure et empêche ainsi de retirer la clé.

De manière non limitative, l'organe (3) de verrouillage disposé dans une position de blocage bloque complètement ou au moins partiellement l'ouverture d'accès, de façon à ce que l'embout ne puisse plus être retiré du logement.

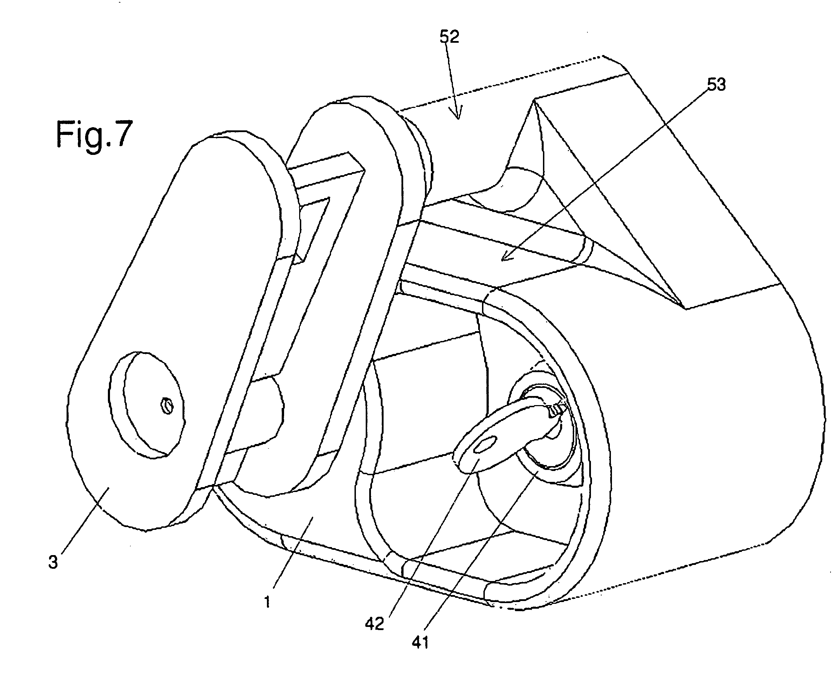

Le logement peut notamment être réalisé par une paroi (51) formant une portion de cylindrique, disposée en face d'un axe (52) cylindrique saillant. L'organe (3) de verrouillage, dans sa position de blocage, vient, par exemple en face de l'espace entre la paroi (51) et l'axe (52). Un antivol comprend par exemple un embout (20) en forme d'anneau venant au tour de l'axe (52) cylindrique saillant. De manière non limitative, ce logement ouvert de chaque côté peut aussi recevoir une chaîne ou un câble fixé par ses deux extrémités à un bâtiment ou à un poteau. Ainsi avantageusement le logement peut être utilisé pour fixer le cycle à un élément du milieu urbain, tel qu'une chaîne ou une barre fixe droite ou arrondie. Le logement peut en effet comprendre une paroi (53) plane disposée en face d'une partie (52) saillante, par exemple cylindrique, l'espace entre l'élément saillant et la paroi du corps étant bloqué, par exemple, pour recevoir une barre fixe d'un élément du milieu urbain. De manière non limitative, le logement peut être réalisé en creux dans le corps (1) ou l'élément saillant peut être réalisé saillant et venant en vis-à-vis d'une surface (53) du corps, comme représenté sur les figures 7 à 10.

Selon une variante, le logement peut aussi comprendre un espace cylindrique ouvert par l'ouverture d'accès et de manière non limitative, par une fente latérale de passage du câble d'antivol. L'embout d'antivol est, par exemple réalisé de forme sphérique ou avec une hauteur minimum déterminée. De manière non limitative, si le logement cylindrique ne comprend pas de fente latérale, l'ouverture d'accès est par exemple bloquée seulement en partie pour laisser passer le câble de l'antivol tout en empêchant l'extraction de l'embout sphérique. Si l'organe (3) de verrouillage bouche complètement l'ouverture d'accès, la fente permet alors le passage du câble de l'antivol. Le logement comprend, par exemple, un espace intérieur cylindrique de diamètre déterminé supérieur au diamètre extérieur de l'embout de forme sphérique. La fente est de largeur déterminée supérieure à l'épaisseur du câble pour permettre le passage du câble. La largeur de la fente est d'autre part inférieure à l'épaisseur ou à la hauteur de l'embout pour bloquer l'embout:

Selon une variante, un second logement comprend une ouverture d'insertion ou d'extraction d'un élément d'immobilisation, cette ouverture pouvant être bloquée par l'organe de verrouillage, par exemple dans une seconde position de blocage. Ainsi plusieurs positions de blocage pour plusieurs ouvertures d'insertion de d'extraction de plusieurs logements peuvent être réalisées.

L'organe de verrouillage est par exemple réalisé sous la forme d'un organe comprenant deux plaques latérales verticales de guidage de chaque côté d'une gâche. Les plaques latérales sont, par exemple, liées en leur milieu à une plaque perpendiculaire comprenant un évidemment pour le passage du bec de la gâche. La plaque perpendiculaire est par exemple disposée quasiment horizontalement dans la position de stockage adns laquelle l'organe de verrouillage est maintenu dans la gâche.

Une rotation de l'organe de verrouillage permet par exemple un positionnement pour bloquer l'ouverture d'accès du logement. De manière non limitative, une rotation entre une position de stockage et une position de blocage est réalisée à 90° ou à 180° ou d'un autre angle tel que l'ouverture d'accès au logement est libérée lorsque l'organe de verrouillage est dans sa position de stockage.

Un organe de verrouillage peut aussi être lié par une rotule au corps (1). La rotule maintenue dans le corps (1) comprend par exemple une ou plusieurs fentes d'insertion d'un crochet ou d'un pêne de la serrure dans la ou les positions de blocage. Ainsi l'orientation peut être réglée selon trois axes de rotation, tandis que la fente dans la rotule permet de déterminer une position précise de blocage.

L'organe de verrouillage peut aussi être réalisé sous la forme d'un doigt, par exemple cylindrique avec une rainure périphérique coopérant avec l'organe de verrouillage de la gâche. Un doigt ou une barre peuvent ainsi être utilisé pour bloquer l'ouverture du logement.

L'extrémité de l'organe (3) de verrouillage peut aussi être réalisée de façon à coopérer à la fois avec la gâche et avec une partie du corps (1) dans sa position de blocage. Un bec est par exemple bloqué dans la gâche ou en appui dans une encoche du corps (1) en position de blocage. Le bec bloqué dans le corps lorsque l'organe de verrouillage est en position de blocage, apporte par exemple une plus grande rigidité et une meilleure résistance pour le blocage de l'ouverture du logement. De plus l'extrémité de l'organe d'accrochage logée dans le corps ne permet plus de réaliser un accrochage dans une gâche d'une borne

Ainsi de multiples réalisations de l'organe de verrouillage sont possibles. L'accrochage lors du stockage peut être réalisé de différentes façons, le positionnement de l'organe de verrouillage dans une position de stockage pouvant être varié. Le dispositif de verrouillage permet ainsi des utilisations très diversifiées.

Un accrochage pour le stockage peut par exemple aussi être empêché par une partie saillante du corps (1) disposée dans le prolongement de l'organe de verrouillage dans sa position de blocage. Cette partie saillante permet par exemple de venir buter contre la gâche pour empêcher un accrochage de l'organe de verrouillage dans la gâche, dans ue position de blocage.

Une position déterminée de blocage de l'organe de verrouillage, comme par exemple vers l'arrière du cycle, peut aussi permettre d'empêcher un accrochage dans la gâche grâce à l'encombrement du cycle ou à des positions interdites du cycle.

Un composant de gestion informatique va maintenant être décrit. Une borne de stockage est par exemple commandée par un composant de gestion informatique qui comprend une interface d'utilisation permettant à un utilisateur d'activer un module de paiement ou d'identification. Après le paiement ou le succès d'une identification de l'utilisateur, un enregistrement des références de l'utilisateur est, par exemple réalisé dans le composant de gestion. Après l'enregistrement des références de l'utilisateur, un module de commande des bornes est par exemple activé. Le module de commande transmet par exemple à un module gestionnaire d'interface des données représentatives d'une borne commandée dans une position déverrouillée, tandis que la gâche de la borne est commandée en position de déblocage. Un identifiant du cycle est, par exemple mémorisé en association avec les références de l'utilisateur. Un circuit électrique de puissance est par exemple commandé par un signal électronique logique transmis par le composant de gestion. Une interface de commande du circuit électrique de puissance est, par exemple commandée par le module de commande des bornes.

Lorsque qu'un cycle est de nouveau stocké avec son organe de verrouillage maintenu dans une gâche d'une borne, une identification du cycle est par exemple réalisée par la borne. La borne est par exemple équipée d'un lecteur pour lire un identifiant du cycle. De manière non limitative, la borne comprend par exemple un lecteur optique pour un code inscrit sur le cycle. La borne peut aussi comprendre un lecteur radiofréquence pour identifier une puce radiofréquence disposée dans le cycle. La borne peut aussi comprendre un lecteur électronique par contact pour lire un identifiant mémorisé dans une puce alimentée et communiquant par des plots de contact. L'identifiant du cycle est par exemple contrôlé pour mettre à jour une base de données comprenant des données représentatives d'identifiants des cycles associés à un état utilisé ou disponible et à des références d'utilisateurs des cycles utilisés. Plusieurs composants de gestion communiquent par exemple avec la base de données pour gérer une pluralité de parcs comprenant chacun un composant de gestion et plusieurs bornes de stockage des cycles.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration mais peuvent être modifiés dans le domaine défini par la portée des revendications jointes.

## Revendications

1. Dispositif de verrouillage comprenant :
- un corps (1) fixable à un cycle et comprenant un logement avec au moins une ouverture d'accès au logement, le corps étant lié avec un organe (3) de verrouillage ayant au moins une position déterminée de stockage dans laquelle l'organe de verrouillage peut être bloqué dans une gâche d'une borne de stockage du cycle,
- une clé (42) actionnant une serrure (41) disposée dans le corps,
**caractérisé en ce que** l'ouverture d'accès au logement est bloquée au moins en partie par l'organe (3) de verrouillage disposé dans une position de blocage de l'ouverture d'accès distincte de la position de stockage et **en ce que** la serrure (41) a au moins une position angulaire prédéterminée d'extraction de la clé (42) correspondant à un blocage, par la serrure, de l'organe (3) de verrouillage dans sa position de blocage de l'ouverture d'accès.

2. Dispositif selon la revendication 1, **caractérisé en ce qu'**il comprend un antivol comprenant un câble (21) fixable au cycle et se terminant à une extrémité par un embout (20), le logement recevant l'embout (20) du câble, l'embout étant inséré ou retiré du logement par l'ouverture d'accès.

3. Dispositif selon la revendication 2, **caractérisé en ce que** le logement a une profondeur déterminée et comprend une paroi (51, 53) en face d'un axe (52) saillant ayant un axe de symétrie, l'embout (20) étant réalisé de forme annulaire, de diamètre intérieur supérieur au diamètre de l'axe (52) saillant, de diamètre extérieur inférieur au double de la distance séparant la paroi (51) de l'axe de symétrie de l'axe (52) saillant et d'épaisseur inférieure à la profondeur du logement.

4. Dispositif selon l'une des revendications 1 à 3, **caractérisé en ce que** la clé (42) reste bloquée dans la serrure (41) dans des positions non verrouillées de la serrure (41), la serrure comprenant un verrou mobile tournant avec la clé (42) et coopérant avec un organe interne au corps (1), cet organe interne étant mobile avec l'organe de verrouillage ou bloquant l'organe de verrouillage lorsque le verrou de la serrure bloque cet organe interne.

5. Dispositif selon l'une des revendications 1 à 4, **caractérisé en ce que** l'organe interne comprend un axe interne guidé en rotation dans le corps (1) et solidarisé avec l'organe (3) de verrouillage, l'axe interne comprenant au moins une fente ou une encoche de coopération avec le verrou, la position de stockage correspondant à une position de l'organe (3) de verrouillage disposé vers l'avant du cycle, la position de blocage de l'ouverture d'accès correspondant à une position de l'organe (3) de verrouillage disposé le haut, le bas ou l'arrière du cycle.

6. Dispositif selon l'une des revendications 1 à 5, **caractérisé en ce que** l'organe (3) de verrouillage comprend une plaque de guidage dans la gâche, la plaque de guidage étant jointe en son milieu par une partie perpendiculaire comprenant un évidemment ou une encoche ou un bec de verrouillage dans la gâche.

7. Système de stockage pour au moins un cycle équipé d'un dispositif de verrouillage selon l'une des revendications 1 à 6, **caractérisé en ce qu'**il comprend au moins une borne d'accrochage comprenant une gâche permettant un accrochage de l'organe (3) de verrouillage dans une position déterminée de l'organe de verrouillage distincte de sa position de blocage de l'ouverture d'accès au logement.

8. Système de stockage selon la revendication 7, **caractérisé en ce qu'**il comprend un composant de gestion comprenant une interface d'utilisation communiquant avec un module d'identification ou de paiement autorisant l'activation d'un module de commande de déblocage de ladite gâche de ladite borne, le module de commande de déblocage activé étant piloté par l'interface d'utilisation.

## Claims

1. Locking device comprising:
- a body (1) which can be fixed to a cycle and comprises a housing with at least one opening for access to the housing, the body being connected to a latching element (3) having at least one defined storage positions in which the latching element can be secured in a lock plate of a cycle storage post,
- a key (42) which actuates a lock (41) disposed in the body,
**characterised in that** the housing access opening is blocked at least in part by the latching element (3) disposed in a position in which it secures the access opening and which is different from the storage position, and **in that** the lock (41) has at least one predetermined angular position for extraction of the key (42) corresponding to the lock securing the latching element (3) in its position of blocking the access opening.

2. Device as claimed in Claim 1, **characterised in that** it comprises an anti-theft device comprising a cable (21) which can be fixed to the cycle and is terminated at one end by a connector (20), the housing receiving the connector (20) for the cable, and the connector can be inserted into or withdrawn from the housing through the access opening.

3. Device as claimed in Claim 2, **characterised in that** the housing has a defined depth and comprises a wall (51, 53) facing a projecting spindle (52) having an axis of symmetry, the convector (20) being of annular shape with an internal diameter greater than the diameter of the projecting spindle (52), with an external diameter less than double the distance separating the wall (51) from the axis of symmetry of the projecting spindle (52) and with a thickness less than the depth of the housing.

4. Device as claimed in any one of Claim 1 to 3, **characterised in that** the key (42) remains secured in the lock (41) in non-locked positions of the lock (41), the lock comprising a movable latch which turns with the key (42) and co-operating with an internal element of the body (1), this internal element being movable with the latching element or securing the latching element when the latch of the lock secures this internal element.

5. Device as claimed in any one of Claims 1 to 4, **characterised in that** the internal element comprises an internal spindle guided in rotation in the body (1) and joined to the latching element (3), the internal spindle comprising at least one slot or notch for cooperation with the latch, the storage position corresponding to a position of the latching element (3) disposed towards the front of the cycle, the position of blocking the access opening corresponding to a position of the latching element (3) disposed high up, low down or at the rear of the cycle.

6. Device as claimed in any one of Claims 1 to 5, **characterised in that** the latching element (3) comprises a plate for guiding in the lock plate, the guiding plate being joined in its centre by a perpendicular part comprising a recess or a notch or a lip for latching in the lock plate,

7. Storage system for at least one cycle equipped with a latching device as claimed in any one of Claims 1 to 6, **characterised in that** it comprises at least one fastening post comprising a lock plate permitting fastening of the latching element (3) in a defined position of the latching element different from its position of blocking the housing access opening.

8. Storage system as claimed in Claim 7, **characterised in that** it comprises a management component comprising a user interface communication with an identification module or payment module authorising the activation of a module for controlling the unblocking of the said lock plate or the said post, the activated unblocking control module being commanded by the user interface.

## Patentansprüche

1. Verriegelungsvorrichtung, aufweisend:
- einen Körper (1), der an einem Fahrrad befestigbar ist und eine Aufnahme mit mindestens einer Öffnung für einen Zugang zu der Aufnahme aufweist, wobei der Körper an ein Verriegelungsmittel (3) abgeschlossen ist, das mindestens eine bestimmte Aufbewahrungsposition aufweiset, in der das Verriegelungsmittel in einem Schließhaken eines Aufbewahrungsanschlusses des Fahrrades blockierbar ist,
- einen Schlüssel (42), der ein Schloss (41) bestätigt, das in dem Körper angeordnet ist,
**dadurch gekennzeichnet, dass** die Aufnahme-zugangsöffnung zumindest teilsweise von dem verriegelungsmittel (3) blockiert wird, das in einer Position zum Blockieren der Zugangsöffnung angeordnet ist, die sich von der Aufbewahrungsposition unterscheidet, und dass das Schloss (41) mindestens eine vorbestimmte Winkelposition zum Herausziehen des Schlüssels (42) aufweist, die einem Blockieren des Verriegelungsmittels (3) in seiner Zugangsöffnungs-Blockierungsposition durch das Schloss entspricht.

2. Vorrichtung gemäß Anspruch 1, **dadurch gekennzeichnet, dass** sie eine Diebstahlsicherung aufweiset, die ein Kabel (21) aufweist, das an dem Fahrrad befestigbar ist und an einem Ende durch ein Anschlussstück (20) endet, wobei die Aufnahme das Anschlussstück (20) des Kabels aufnimmt, wobei das Anschlussstück durch die Zugangsöffnung in die Aufnahme eingesetzt oder aus dieser herausgezogen wird.

3. Vorrichtung gemäß Anspruch 2, **dadurch gekennzeichnet, dass** die Aufnahme eine bestimmte Tiefe hat und eine Wand (51, 53) gegenüber einer hervorstehenden Achse (52) mit einer Symmetrieachse aufweiset, wobei das Anschlussstück (20) ringförmig, mit einem Innendurchmesser, der größer als der Durchmesser der hervorstehenden Achse (52) ist, mit einem Außendurchmesser, der kleiner als das Doppelte der die Wand (51) von der Symmetrieachse der hervorstehenden Achse (52) trennenden Entfernung ist, und mit einer Dicke, die kleiner als die Tiefe der Aufnahme ist, ausgebildet ist.

4. Vorrichtung gemäß einem der Ansprüche 1 bis 3, **dadurch gekennzeichnet, dass** der Schlüssel (42) in dem Schloss (41) in Nicht-Verriegelungs-Positionen des Schlosses (41) blockiert bleibt, wobei das Schloss einen bewegbaren Riegel aufweist, der sich mit dem Schlüssel (42) zusammen dreht und mit einem innerhalb des Körpers (1) angeordneten Mittel zusammenwirkt, wobei das innere Mittel mit dem Verriegelungsmittel zusammen bewergbar ist oder das Verriegelungsmittel blockiert, wenn der Riegel des Schlosses das innere Mittel blockiert.

5. Vorrichtung gemäß einem der Ansprüche 1 bis 4, **dadurch gekennzeichnet, dass** das innere Mittel eine Innenachse aufweist, die drehbar in dem Körper (1) geführt ist und einstückig mit dem Verriegelungsmittel (3) ausgebildet ist, wobei die Innenachse mindestens einen Schlitz oder eine Einkerbung zum Zusammenwirken mit dem Riegel aufweist, wobei die Aufbewahrungsposition mit einer Position des Verriegelungsmittels (3) korrespondiert, die in Richtung des vorderen Endes des Fahrrades vorgesehen ist, wobei die Position zum Blockieren der Zugangsöffnung mit einer Position des Verriegelungsmittels (3) korrespondiert, die oben, unten oder hinten am Fahrrad vorgesehen ist.

6. Vorrichtung gemäß einem der Ansprüche 1 bis 5, **dadurch gekennzeichnet, dass** das Verriegelungsmittel (3) eine Führungsplatte in dem Schließhaken aufweist, wobei die Führungsplatte in ihrer Mitte durch einen senkrechten Teil angeschlossen ist, der eine Aussparung oder eine Einkerbung oder eine Spitze zum Verriegeln in dem Schließhaken aufweist.

7. System zum Aufbewahren für mindestens ein Fahrrad, das mit einer Verriegelungsvorrichtung gemäß einem der Ansprüche 1 bis 6 ausgestattet ist, **dadurch gekennzeichnet, dass** es mindestens einen Befestigungsanschluss aufweist, der einen Schließhaken aufweiset, der ein Befestigen des Verriegelungsmittels (3) in einer bestimmten Position des Verriegelungsmittels ermöglicht, die sich von seiner Position zum Blockieren der Aufnahme-Zugangsöffnung unterscheidet.

8. Aufbewahrungssystem gemäß Anspruch 7, **dadurch gekennzeichnet, dass** es eine Verwaltungskomponente aufweist, die eine Benutzerschnittstelle aufweiset, die mit einem Modul zum Identifizieren oder Bezahlen kommuniziert, welches das Aktivieren eines Moduls zum Befehlen des Entriegelns des Schließhakens des Anschlusses autorisiert, wobei das aktivierte Entriegelungs-Befehls-Modul von der Benutzerschnittstelle gesteuert wird.
